# FASCICULE DE BREVET EUROPEEN

(11) **EP 1 843 032 B1**
(45) Date de publication et mention de la délivrance du brevet: **30.06.2010**
(21) Numéro de dépôt: 07290363.6
(22) Date de dépôt: 26.03.2007
(51) Int. Cl.: F02K 1/82

(54) **Corps central de tuyère de turboréacteur**
Zentralkörper der Schubdüse eines Turbinentriebwerks
Central body of jet engine nozzle

(30) Priorité: 24.03.2006 FR 0602580
(43) Date de publication de la demande: 10.10.2007
(73) Titulaire: SNECMA, 75015 Paris (FR)
(72) Inventeur: Bouty, Eric Jean-Louis, 77550 Moissy Cramayel (FR); Dravet, Alain, 13170 Les Pennes Mirabeau (FR); Le Docte, Thierry Jacques Albert, 76700 Gainneville (FR); Riou, Georges Jean Xavier, 77000 Melun (FR); Vincent, Thomas Alain Christian, 91120 Palaiseau (FR)
(74) Mandataire: David, Daniel

(56) Documents cités:
- US-A- 4 064 961
- US-A- 4 137 992
- US-A- 4 240 519
- US-A- 4 258 822

## Description

L'invention concerne le domaine de la réduction du bruit en sortie d'un turboréacteur.

Un turboréacteur comprend, d'amont en aval dans le sens de l'écoulement des gaz, une soufflante, un ou plusieurs étages de compresseurs, une chambre de combustion, un ou plusieurs étages de turbines et une tuyère d'échappement des gaz. Ce sont les gaz du flux primaire du turboréacteur, c'est-à-dire le flux de gaz en sortie des étages de turbine et en provenance de la chambre de combustion, qui s'échappent par la tuyère d'échappement des gaz.

La tuyère comporte généralement un carter externe de tuyère, qui délimite l'enveloppe externe de la veine de gaz du flux d'échappement, ainsi qu'un carter interne de tuyère, qui délimite l'enveloppe interne de la veine de gaz du flux d'échappement, pour favoriser son écoulement. Le carter interne de tuyère forme un corps central de la tuyère et se présente sous la forme d'une paroi présentant une surface de révolution, qui peut être cylindrique, conique ou plus généralement de forme aérodynamique adaptée au flux, à symétrie de révolution autour de l'axe du turboréacteur. L'homme du métier désigne généralement ce corps central de tuyère par sa dénomination anglaise, à savoir, "plug". On parlera dans la suite du corps central de tuyère, ou corps central.

On note que la paroi du corps central de la tuyère peut également ne pas être à symétrie de révolution, pour des motifs de réduction du bruit du jet de gaz ou de réduction de la signature infrarouge ; le corps central peut présenter dans ce cas une section transversale ondulée, rectangulaire ou elliptique, par exemple. La présente invention s'applique particulièrement bien à un corps central avec une paroi à symétrie de révolution - ce qui est généralement le cas dans les applications civiles - mais s'applique également à un corps central qui n'est pas à symétrie de révolution.

Le corps central remplit, dans certains turboréacteurs, une autre fonction, qui est de guider le flux de dégazage du turboréacteur. Il est en effet prévu, sur certains turboréacteurs, à l'extrémité aval de son arbre central, un orifice de dégazage, par lequel s'échappent divers fluides tels que de la vapeur d'huile, certains gaz de refroidissement, etc. On parle généralement de déshuileur. Dans ce cas, soit un tuyau de guidage du flux de dégazage s'étend au sein du corps central jusqu'à son extrémité, pour un guidage canalisé du flux de dégazage, soit aucun tuyau n'est prévu, le corps central assurant, par sa surface interne, le guidage du flux de dégazage. Le dégazage se fait généralement par aspiration, la pression au sein du tuyau ou du corps central étant inférieure à la pression dans l'enceinte du turboréacteur.

Un problème constant des fabricants de moteurs est la réduction du bruit, notamment par souci du confort des passagers et des habitants des zones survolées par les avions. Il convient donc d'atténuer le bruit, notamment le bruit dans la tuyère, qui se compose du bruit de la chambre de combustion, ou bruit de combustion, qui est à basses fréquences, et du bruit des turbines haute et basse pression, ou bruit de turbine, qui est à plus hautes fréquences. Avec les revêtements acoustiques passifs classiques, c'est-à-dire les dispositifs dont la géométrie est figée, l'atténuation du bruit de combustion à basses fréquences ne peut être obtenue avec le carter externe de tuyère, car le volume à cet endroit n'est pas suffisant. C'est donc le bruit de turbine à plus hautes fréquences qui peut être traité sur le carter externe de tuyère, par exemple à l'aide d'une mince couche d'un matériau conformé en nids d'abeilles. Le problème se pose donc de l'atténuation du bruit de combustion basses fréquences.

On connaît, par le document US 5, 592, 813, l'utilisation d'un corps central d'atténuation du bruit de combustion, comportant deux surfaces concentriques entre lesquelles sont ménagés des nids d'abeilles, sur une épaisseur importante. On connaît en outre, par le document EP 1, 391, 597, l'utilisation d'un corps central formé de deux cônes, d'atténuation du bruit, le cône externe étant perforé et des cavités étant ménagées entre les deux cônes sous les perforations. Ces cavités forment en quelque sorte des nids d'abeilles de grandes dimensions, filtrant mieux les bruits basses fréquences. Chaque ensemble d'une cavité et d'une pluralité de trous forme un résonateur de Helmholtz, bien connu de l'homme du métier. Il en va de même pour les nids d'abeilles, à plus petite échelle, mais sur une grande épaisseur.

Les deux solutions présentées procurent de bons résultats en atténuation du bruit. Elles sont toutefois très coûteuses, en prix et en masse, à mettre en place. Il est presque impossible - et donc cher - de plier des tôles conformées en nids d'abeilles, tandis que la mise en place de plus grandes cavités s'avère fastidieuse et de poids conséquent.

La présente invention vise à proposer un dispositif d'atténuation du bruit basses fréquences du moteur, qui soit moins coûteux et moins lourd. Les basses fréquences s'entendent typiquement de fréquences globalement comprises entre 500 et 1000 Hz.

A cet effet, l'invention concerne un corps central de tuyère de turboréacteur, comportant une paroi formant une cavité et une pluralité d'orifices percés sur au moins une portion amont de sa paroi, caractérisé par le fait que le corps central de tuyère comporte une cavité de résonance unique formant un résonateur de Helmholtz.

Un tel corps central permet l'atténuation des bruits basses fréquences. Il forme un résonateur de Helmholtz avec une pluralité d'orifices et une cavité unique, commune à tous les orifices. L'invention a donc notamment consisté à remplacer un corps central, avec une pluralité de cavités formant résonateurs de Helmholtz, par un corps central, avec une cavité unique, commune à une pluralité d'orifice, formant un résonateur de Helmholtz unique. Si les performances acoustiques d'un tel résonateur sont moins bonnes que celles des dispositifs de l'art antérieur présentés ci-dessus - on peut prévoir une baisse de 30% des performances en atténuation -, le coût et la masse d'un tel corps central sont nettement réduits. L'invention réside donc en un dispositif offrant un compromis entre la performance de l'atténuation acoustique, d'une part, le coût et la masse du dispositif d'atténuation acoustique, d'autre part. L'étendue longitudinale de la portion amont percée d'orifices est de préférence déterminée par calculs, à partir d'une loi de pression statique au sein de la cavité, la limite aval de cette portion étant fixée en fonction des pertes aérodynamiques maximales, par re-circulation du flux de gaz d'échappement dans la cavité, qui sont tolérées. On note que, dans l'hypothèse où de fortes pertes seraient tolérées, la paroi amont peut s'entendre de toute la paroi du corps central.

Dans une forme de réalisation particulière, le corps central comporte une paroi interne, non percée, à l'intérieur de la paroi formant la cavité, délimitant une cavité externe, formant ladite cavité unique de résonance, et une cavité interne.

Une telle paroi permet de régler le volume du résonateur et donc de l'adapter aux fréquences que l'on souhaite atténuer. Par ailleurs, cette paroi permet éventuellement, dans le cas d'un turboréacteur comportant un déshuileur, de séparer la cavité du corps central en deux cavités : une cavité de résonance et une cavité de guidage du flux de dégazage.

Dans le cas où une paroi interne est prévue, la cavité résonnante comporte une paroi externe, où sont percés les orifices, et une paroi interne, et c'est l'une quelconque de ces cavités externe et interne qui peut être rapportée sur le corps central.

De préférence dans ce cas, un joint est prévu entre les parois externe et interne, pour la reprise des différentiels de dilatation.

Avantageusement, la paroi formant la cavité est une paroi de révolution. C'est généralement le cas des corps centraux de turboréacteurs à application civile, auxquels l'invention est particulièrement destinée puisque les problèmes de coût et de masse y sont particulièrement sensibles. La structure du corps central en est d'autant simplifiée.

Avantageusement encore, le corps central comporte au moins un moyen raidisseur permettant d'améliorer sa tenue mécanique.

Avantageusement toujours, la paroi formant le corps central est une paroi métallique, de préférence d'épaisseur constante.

L'invention concerne également un turboréacteur, comportant une tuyère avec le corps central décrit ci-dessus.

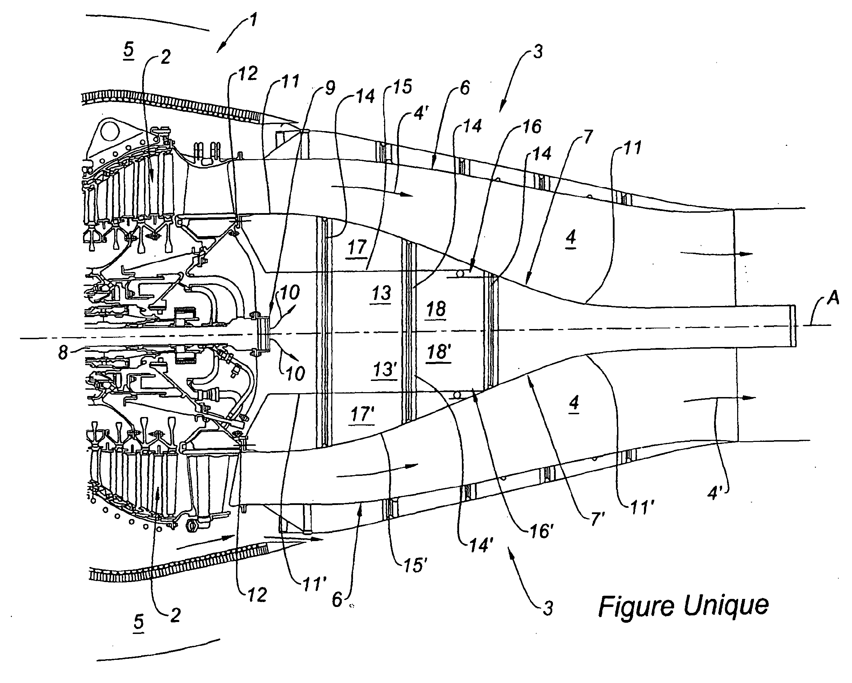

L'invention sera mieux comprise à l'aide de la description suivante des deux formes de réalisation préférées de l'invention, en référence à la figure unique annexée, qui représente une vue en coupe schématique d'un turboréacteur avec le corps central de l'invention, divisée en deux parties suivant un plan de symétrie, perpendiculaire au plan de coupe et passant par l'axe du turboréacteur, la partie supérieure représentant une première forme de réalisation du corps central de l'invention et la partie inférieure une seconde forme de réalisation du corps central de l'invention.

La figure présente, dans sa partie haute, une première forme de réalisation, dans sa partie basse, une deuxième forme de réalisation, de manière symétrique par rapport à un plan, perpendiculaire au plan de coupe et passant par l'axe A du turboréacteur. Les éléments communs aux deux formes de réalisation seront désignés par des références identiques.

Le turboréacteur 1 présenté est un turboréacteur à double corps et double flux. Il comprend, d'amont en aval dans le sens de l'écoulement des gaz, une soufflante, un compresseur basse pression, un compresseur haute pression, une chambre de combustion, une turbine haute pression, une turbine basse pression 2 et une tuyère 3 d'échappement des gaz. Le gaz entre dans le turboréacteur par la soufflante et se divise, en aval de la soufflante puis tout au long du turboréacteur, en un flux de gaz primaire 4 et un flux de gaz secondaire. Le flux de gaz primaire 4 passe dans les compresseurs, la chambre de combustion et les turbines pour s'échapper par la tuyère 3. Le flux de gaz secondaire 5, en provenance directe de la soufflante et recueillant également un peu de gaz prélevé dans l'enceinte du turboréacteur, s'échappe à la périphérie de la tuyère, en amont de celle-ci, guidé depuis la soufflante par la nacelle du turboréacteur. C'est, dans ce type de moteur, le flux de gaz secondaire 5 qui fournit principalement la poussée du moteur.

La tuyère 3 comporte un carter externe 6 de tuyère, dont la surface interne délimite l'enveloppe externe de la veine du flux primaire dans la tuyère 3, et un carter interne 7 de tuyère, ou corps central 7, dont la surface externe délimite l'enveloppe interne de la veine du flux primaire dans la tuyère 3, de manière connue de l'homme du métier. Le flux d'air primaire 4 est ainsi guidé entre les carters interne 7 et externe 6 de tuyère 3, comme on le voit schématiquement par les flèches 4'.

Le rotor basse pression, comportant notamment les compresseur et turbine basse pression, comporte un arbre 8. Dans le turboréacteur ici décrit, un déshuileur 9 est ménagé à l'extrémité aval de l'arbre 8 du rotor basse pression. Comme schématisé par les flèches 10, de la vapeur d'huile, divers gaz de refroidissement, etc., s'échappent par le déshuileur, par un phénomène d'aspiration, comme il sera vu plus loin ; il s'agit du flux de dégazage 10.

En référence à la partie supérieure de la figure, le corps central 7 comporte une paroi externe 11, qui est ici une paroi métallique, de préférence d'épaisseur constante. Cette paroi externe 11 est ici une paroi de révolution, c'est-à-dire qu'elle est à symétrie de révolution autour de l'axe A du turboréacteur. Elle est ici de forme semblable à celle des corps centraux de l'art antérieur, à savoir, une forme aérodynamique agencée pour guider le flux de gaz primaire 4. En l'espèce, d'amont en aval, la paroi externe 11 est successivement de forme cylindrique, tronconique avec un diamètre se réduisant vers l'aval, puis cylindrique de nouveau, de diamètre inférieur à la partie amont. Ces formes s'enchaînent de manière continue et curviligne. La paroi externe 11 est fixée, du côté amont, à la structure fixe 12 du turboréacteur 1, dans le prolongement d'une paroi délimitant l'enveloppe interne de la veine du flux de gaz primaire 4 émergeant de la turbine basse pression 2.

La paroi 11 définit une cavité 13, que l'on nommera cavité globale 13 car elle correspond au volume global délimité par la paroi externe 11 du corps central 7. Cette cavité 13 est creuse, c'est-à-dire qu'il n'est pas prévu de couches de nids d'abeille ou autre pluralité de cavités de résonance comme dans l'art antérieur, pour l'atténuation du bruit.

De préférence, il est prévu des moyens raidisseurs 14 qui participent à la tenue mécanique du corps central 7. Ces moyens raidisseurs 14 se présentent ici sous la forme de nervures circonférentielles ménagées sur la surface interne de la paroi externe 11 du corps central 7. Ils sont ici au nombre de trois.

La paroi externe 11 du corps central 7 est percée d'une pluralité d'orifices, sur une portion amont de sa surface, de manière non visible sur la figure du fait de leur petitesse. Ces orifices débouchent donc, d'une part, dans le flux de gaz primaire du turboréacteur 1, d'autre part, dans la cavité 13 du corps central 7. En l'espèce, des orifices sont percés régulièrement sur une portion amont de la paroi 11, qui s'étend jusqu'au deuxième moyen raidisseur 14. Ces orifices sont tous ici de diamètre identique et répartis uniformément. Typiquement, pour un corps central 7 dont le diamètre de la portion cylindrique amont est de l'ordre de 60 à 70 cm, les orifices présentent un diamètre de 0,5 à 1,5 mm.

Le corps central 7 comporte par ailleurs une paroi interne 15, qui s'étend à l'intérieur de la paroi externe de révolution 11 délimitant la cavité globale 13. Cette paroi interne 15 est pleine, c'est-à-dire qu'elle n'est pas percée d'orifices. Elle est ici métallique, de préférence d'épaisseur constante. La paroi interne 15 est fixée, en amont, à la structure fixe 12 du turboréacteur 1, en l'espèce au même endroit et éventuellement par les mêmes moyens de fixation que la paroi externe 11. A partir de cette zone de fixation, la paroi interne 15 comporte une portion tronconique dont le diamètre diminue très rapidement et vers l'aval, puis une portion cylindrique. L'extrémité aval de cette portion cylindrique est fixée sur la surface interne de la paroi externe 11 du corps central 7, en l'espèce à une bride en saillie de cette surface. Elle est de préférence fixée par un joint 16, conformé de manière idoine de sorte à compenser le différentiel de dilatation existant entre la paroi externe 11 et la paroi interne 15, dans la mesure où la paroi externe 11 est directement soumise au flux de gaz primaire et chauffe donc très vite, la paroi interne 15 étant moins exposée et chauffant moins vite. Tout type de joint approprié peut être envisagé, qui accorde une liberté de mouvements aux éléments qu'il rend solidaires. La paroi interne 15 est reliée à la paroi externe 11 en une zone située en aval de la limite aval de la portion amont de la paroi externe 11 sur laquelle sont percés les orifices.

La paroi interne 15 délimite ainsi une cavité externe 17, qui s'étend entre la paroi externe 11 et la paroi interne 15, et une cavité interne 18, correspondant au reste de la cavité globale 13 délimitée par la paroi externe 11 du corps central 7.

La cavité externe 17 forme une cavité 17 de résonance, dont la fonction est d'atténuer les bruits basses fréquences dans la tuyère, notamment le bruit de combustion, en coopération avec les orifices percés dans la paroi externe 11 du corps central 7, orifices qui débouchent, d'une part, dans cette cavité 17 de résonance, d'autre part, dans le flux de gaz primaire. Les orifices forment avec la cavité 17 de résonance un résonateur de Helmholtz, avec une cavité 17 de résonance unique, commune pour tous les orifices.

L'efficacité d'un tel résonateur de Helmholtz, avec une cavité 17 de résonance unique pour une pluralité d'orifices, est moindre que celle d'une pluralité de résonateurs de Helmholtz, comprenant une cavité distincte pour chaque orifice. On peut estimer à 30% la perte en efficacité d'atténuation entre ces deux types de résonateurs. Toutefois, le corps central 7 de l'invention est simple à mettre en place, donc à faible coût, et présente une masse faible. Il s'agit donc d'un compromis entre, d'une part, une efficacité acceptable quant à l'atténuation du bruit, d'autre part, un coût et une masse raisonnables.

La présence de la paroi interne 15, formant la paroi interne de la cavité 17 de résonance, permet de régler le volume de la cavité 17 de résonance, en fonction des fréquences que l'on souhaite atténuer.

Par ailleurs, cette paroi interne 15 assure, par sa surface interne, une fonction de guidage pour le flux de dégazage débouchant du déshuileur 9. Comme elle n'est pas percée d'orifices, elle permet de conserver, dans la cavité interne 18 de guidage du flux de dégazage, une pression inférieure à la pression dans l'enceinte du turboréacteur 1, ce qui permet au flux de dégazage d'être aspiré dans la cavité interne 18. En effet, la pression dans la cavité 17 de résonance est supérieure à la pression dans la cavité interne 18, car un peu de gaz du flux primaire pénètre par les orifices.

L'étendue longitudinale de la portion amont de la paroi externe 11 qui est percée d'orifices est déterminée par calculs, à partir d'une loi de pression statique au sein de la cavité 17 de résonance. En effet, le flux de gaz primaire a tendance à recirculer dans la cavité 17 de résonance, c'est-à-dire à rentrer par un orifice amont et à ressortir par un orifice aval. Moins la portion de paroi percée d'orifices est étendue longitudinalement, moins ce phénomène est important. La détermination de l'abscisse longitudinale, sur la paroi 11 du corps central 7, à partir de laquelle il n'y a plus d'orifices, est ainsi déterminée en fonction du seuil de tolérance, que l'homme du métier se fixe, pour cette re-circulation de gaz. Incidemment, si ce seuil de tolérance n'est pas trop exigent cette portion amont pourrait s'entendre de toute la portion de la paroi externe 11 qui est au droit de la paroi interne 15, c'est-à-dire qui forme la paroi interne de la cavité 17 de résonance. Dans le cas d'espèce présenté, la limite a été fixée environ à la deuxième nervure formant moyen raidisseur 14. Les calculs peuvent être faits en deux ou trois dimensions, selon le degré de précision requis ; ils permettent de calculer la répartition (loi) de pression statique en paroi en fonction de l'évolution de la section et du nombre de Mach dans le flux de gaz primaire 4.

En référence à la partie inférieure de la figure, dans la deuxième forme de réalisation ici présentée, le corps central 7' présente de même que précédemment une paroi 11'. La différence est que cette paroi 11' correspond, dans sa partie aval, à la paroi externe 11 précédemment présentée, dans sa partie amont délimitant la cavité de résonance, à la paroi interne 15 du corps central de la première forme de réalisation. Le corps central 7' comprend par ailleurs une paroi externe 15', c'est-à-dire qui forme la paroi externe de la cavité de résonance qui a la forme de la partie amont de la paroi externe 11 de la première forme de réalisation, qui se trouve au droit de la paroi interne 15, c'est-à-dire qui forme la paroi externe de la cavité 17 de résonance.

Autrement dit, le corps central 7' de la deuxième forme de réalisation définit, de même que précédemment, une cavité globale 13', divisée en une cavité de résonance 17' et une cavité interne 18', qui présentent les mêmes formes et volumes que dans la première forme de réalisation. La différence est que, dans la première forme de réalisation, la paroi externe 11 est monobloc et définit l'ensemble des parois externes du corps central 7, correspondant à un corps central de l'art antérieur, avec les orifices en plus, tandis que la paroi interne 15 est rapportée, pour former la cavité de résonance 17, alors que dans la deuxième forme de réalisation, c'est la paroi externe 15' de la cavité 17' de résonance qui est rapportée, sur une paroi 11' du corps central qui définit de la sorte, dans sa portion amont, la paroi interne de la cavité de résonance 17', dans sa portion aval, la forme de la portion aval correspondante du corps central 7'. Il ne s'agit donc juste que de savoir quelle portion est monobloc jusqu'à l'extrémité aval du corps central 7, 7'.

Dans cette deuxième forme de réalisation, la paroi de révolution définissant la cavité globale 13' du corps central est donc composée de la paroi externe 15' et d'une portion aval de la paroi 11' monobloc, dont la portion amont définit la paroi interne de la cavité 17' de résonance. On retrouve bien toutefois une cavité globale 13' du corps central 7', une cavité 17' unique de résonance, en communication avec les orifices débouchant dans le flux de gaz primaire, et une cavité interne pour le guidage du flux de dégazage en provenance du déshuileur 9, ne communiquant pas avec la cavité 17' de résonance.

De même que précédemment, les parois 11', 15' formant la cavité 17' de résonance sont reliées par un joint 16', pour la reprise des différentiels de dilatation, et des moyens raidisseurs 14', sous la forme de nervures, sont prévus pour la tenue mécanique du corps central 7'. C'est la paroi externe rapportée 15' qui comporte les orifices, débouchant dans le flux de gaz primaire et communiquant avec la cavité 17' de résonance pour former un résonateur de Helmholtz avec une cavité 17' unique de résonance, commune pour les orifices. Les diverses remarques faites pour la première forme de réalisation s'appliquent *mutatis mutandis.*

Il va de soi que la structure et l'agencement des divers éléments peuvent être modifiés par l'homme du métier.

Notamment, en l'absence de déshuileur 9, l'homme du métier peut décider de ne pas prévoir de paroi interne 15 au sein de la cavité globale 13 du corps central 7. Dans ce cas, c'est l'ensemble de la cavité 13 formée par la paroi de révolution 11 qui forme une cavité 13 de résonance, dans laquelle débouche les orifices, débouchant par ailleurs dans le flux de gaz primaire. Dans le cas où le seuil de tolérance des recirculations de gaz ne serait pas trop exigent, c'est donc l'ensemble de la paroi du corps central 7 qui pourrait être percée d'orifices.

Par ailleurs, et même en l'absence de déshuileur 9, l'homme du métier peut prévoir une paroi interne 15, ou externe 15', formant une cavité 17, 17' de résonance de plus petit volume que la cavité globale 13, 13', dans un but de dimensionnement du volume de cette cavité 17 de résonance en fonction des fréquences du bruit qui doit être atténué.

En outre, diverses formes et volumes pour les cavités sont possibles. La paroi interne 15 pourrait être de forme curviligne, ou encore consister en un tuyau rectiligne de faible diamètre servant uniquement de moyen de guidage pour le flux de dégazage.

## Revendications

1. Corps central de tuyère de turboréacteur, comportant une paroi (11, (11', 15')) formant une cavité (13, 13') et une pluralité d'orifices percés sur au moins une portion amont de sa paroi (11, (11', 15')), **caractérisé par le fait que** le corps central de tuyère une cavité de résonance (17,17') unique formant un résonateur de Helmholtz.

2. Corps central selon la revendication 1, qui comporte une paroi interne (15, 11'), non percée, à l'intérieur de la paroi (11, (11', 15')) formant la cavité (13, 13'), délimitant une cavité externe (17, 17'), formant ladite cavité unique de résonance (17, 17'), et une cavité interne (18, 18').

3. Corps central selon la revendication 2, dans lequel la cavité interne (18, 18') est agencée pour remplir une fonction de guidage du flux de dégazage (10), pour un turboréacteur comportant un déshuileur (9).

4. Corps central selon l'une des revendications 2 et 3, dans lequel un joint (16, 16') est prévu entre la paroi interne (15, 11') et la paroi (11, (11', 15')) formant la cavité (13, 13'), pour la reprise des différentiels de dilatation.

5. Corps central selon l'une des revendications précédentes, dans lequel la paroi (11, (11', 15')) formant la cavité (13, 13') est une paroi de révolution.

6. Corps central selon l'une des revendications précédentes, qui comporte au moins un moyen raidisseur (14) permettant d'améliorer sa tenue mécanique.

7. Corps central selon l'une des revendications précédentes, dans lequel la paroi (11, (11', 15')) formant la cavité (13, 13') est une paroi métallique.

8. Corps central selon la revendication 7, dans lequel la paroi métallique (11, (11', 15')) est d'épaisseur constante.

9. Turboréacteur, comportant une tuyère (3) avec un corps central selon l'une des revendications 1 à 8.

## Claims

1. A central body of a turbojet nozzle comprising a wall (11,(11',15'))forming a cavity (13,13') and a plurality of orifices pierced over at least one upstream portion of its wall (11,(11',15')), **characterized in that** the central body comprises a single resonance cavity (17,17') forming a Helmholtz resonator.

2. The central body as claimed in claim 1, which comprises an inner wall (15,11'), not pierced, inside the wall (11, (11',15')) forming the cavity (13,13'), delimiting an outer cavity (17,17'), forming said single resonance cavity (17,17'), and an inner cavity (18,18').

3. The central body as claimed in claim 2, wherein the inner cavity (18,18') is arranged to fulfill a function of guidance of the vapor relief stream (10), for a turbojet comprising a deaerator (9).

4. The central body as claimed in one of claims 2 and 3, wherein a seal (16,16') is provided between the inner wall (15,11') and the wall (11,(11',15')) forming the cavity (13,13'), in order to take up the expansion differentials.

5. The central body as claimed in one of the preceding claims, wherein the wall (11,(11',15')) forming the cavity (13,13') is a wall of revolution.

6. The central body as claimed in one of the preceding claims, which comprises at least one stiffener (14) means making it possible to improve its mechanical strength.

7. The central body as claimed in one of the preceding claims, wherein the wall (11, (11',15')) forming the cavity (13,13') is a metal wall.

8. The central body as claimed in claim 7, wherein the metal wall (11, (11',15')) is of constant thickness.

9. A turbojet comprising a nozzle (3) with a central body as claimed in one of claims 1 to 8.

## Patentansprüche

1. Düsenzentralkörper eines Turboluftstrahltriebwerks, umfassend eine einen Hohlraum (13, 13') bildende Wand (11, (11', 15')) und eine Vielzahl von Öffnungen, die in mindestens einem vorgeschalteten Abschnitt seiner Wand (11, (11',15')) gebohrt sind, **dadurch gekennzeichnet, dass** der Düsenzentralkörper einen einzigen Resonanzraum (17, 17') umfasst, der einen Helmholtz-Resonator bildet.

2. Zentralkörper nach Anspruch 1, der eine nicht durchbohrte Innenwand (15, 11') im Innern der den Hohlraum (13, 13') bildenden Wand (11, (11',15')) umfasst, die einen externen Hohlraum (17, 17'), der den einzigen Resonanzraum (17, 17') bildet, und einen internen Hohlraum (18, 18') begrenzt.

3. Zentralkörper nach Anspruch 2, wobei der interne Hohlraum (18, 18') angeordnet ist, um eine Funktion zum Führen der Gasabgabe (10) für ein Turboluftstrahltriebwerk, das einen Ölabscheider (9) umfasst, zu erfüllen,

4. Zentralkörper nach einem der Ansprüche 2 und 3, wobei eine Dichtung (15, 16') zwischen der internen Wand (15, 11') und der den Hohlraum (13, 13') bildenden Wand (11, (11',15')) für die Übernahme der Dehnungsunterschiede bereitgestellt wird.

5. Zentralkörper nach einem der vorhergehenden Ansprüche, wobei die den Hohlraum (13, 13') bildende Wand (11, (11', 15')) eine Rotationswand ist.

6. Zentralkörper nach einem der vorhergehenden Ansprüche, der mindestens ein Versteifungsmittel (14) umfasst, das es ermöglicht, seine mechanische Haltbarkeit zu verbessern.

7. Zentralkörper nach einem der vorhergehenden Ansprüche, wobei die den Hohlraum (13, 13') bildende Wand (11, (11', 15')) eine Metallwand ist.

8. Zentralkörper nach Anspruch 7, wobei die Metallwand (11, (11', 15')) eine konstante Dicke aufweist.

9. Turboluftstrahltriebwerk, umfassend eine Düse (3) mit einem Zentralkörper nach einem der Ansprüche 1 bis 8.
